# FASCICULE DE BREVET EUROPEEN

(11) **EP 1 735 882 B1**
(45) Date de publication et mention de la délivrance du brevet: **16.07.2008**
(21) Numéro de dépôt: 05749199.5
(22) Date de dépôt: 01.04.2005
(51) Int. Cl.: H01S 3/067

(54) **FIBRE OPTIQUE A TROUS**
HOHLE OPTISCHE FASER
HOLLOW OPTICAL FIBRE

(30) Priorité: 02.04.2004 FR 0450665
(43) Date de publication de la demande: 27.12.2006
(73) Titulaire: Alcatel Lucent, 75008 Paris (FR)
(72) Inventeur: PROVOST, Lionel, F-91460 Marcoussis (FR); MELIN, Gilles, F-91400 Orsay (FR); GASCA, Laurent, F-91140 Villebon-Sur-Yvette (FR)
(74) Mandataire: Chaffraix, Sylvain
(86) Numéro de dépôt international: PCT/FR2005/000803
(87) Numéro de publication internationale: WO 2005/098494

(56) Documents cités:
- US-A1- 2002 061 176
- US-A1- 2003 012 535
- US-A1- 2003 190 129
- SAITOH K ET AL: "CHROMATIC DISPERSION CONTROL IN PHOTONIC CRYSTAL FIBERS: APPLICATION TO ULTRA-FLATTENED DISPERSION" OPTICS EXPRESS, OPTICAL SOCIETY OF AMERICA, WASHINGTON, DC,, US, vol. 11, no. 8, 21 septembre 2003 (2003-09-21), pages 843-852, XP001188201 ISSN: 1094-4087

## Description

L'invention concerne le domaine des fibres optiques présentant des cavités dans leur structure, ces fibres optiques étant plus communément appelées fibres optiques « à trous ». Un des intérêts majeurs des fibres optiques à trous est la présence de cavités dont l'indice très bas permet de diminuer de manière importante l'indice moyen des régions annulaires de la gaine comportant ces cavités.

Pour la réalisation de certaines fonctions non linéaires, les fibres optiques à trous représentent la famille de fibres optiques la plus intéressante. Un certain type de fibres optiques à trous comporte deux couches de cavités, une couche plus proche du centre de la fibre optique et comprenant surtout des cavités de taille relativement petite ou même pas de cavités du tout, cette couche interne ayant pour fonction principale d'influer sur les propriétés de la fibre optique, à savoir notamment la surface effective et la dispersion chromatique, et une couche plus éloignée du centre de la fibre optique comprenant des cavités de taille relativement grande, cette couche externe ayant pour fonction principale le confinement des modes à l'intérieur de la fibre optique.

Un des problèmes majeurs des fibres optiques à trous est le niveau élevé de pertes par fuite de modes, lequel nécessite, pour être plus ou moins bien résolu, la réalisation de structures complexes et volumineuses, comprenant notamment un grand nombre de cavités assez espacées les unes des autres, ce qui amène un encombrement global qui devient rapidement important. En effet, il est connu que le niveau de pertes par fuite de mode sera d'autant plus faible que la largeur de l'ensemble des couches comprenant les cavités sera importante. Par ailleurs, une taille unique de cavités dans la couche externe est généralement considérée comme suffisante.

Des exemples de ce type de structure peuvent être trouvés dans les documents de l'art antérieur, parmi lesquels citons :
- des brevets et demandes de brevet : US 2003/0012535 ; US 2002/0061176 ; US 2001/0031118 ; EP 1118887; EP 0810453; WO 03/019257 ; WO 02/084350 ; WO 01/98819 ; US 6539155 ;
- des publications : « Dispersion flattened hybrid-core non linear photonic crystal fiber » par K.P. Hansen, dans Opt. Express 11, pages 1503-1509, en 2003 ; « Chromatic dispersion control in photonic crystal fibers : application to ultra-flattened dispersion » par K. Saitoh, M. Koshiba, T. Hasegawa, et E. Sasaoka, dans Opt. Express 11, pages 843-852, en 2003.

L'invention est aux antipodes de cette technique de l'art antérieur. L'invention vise une structure moins encombrante mais plus serrée de manière à présenter un degré élevé de confinement des modes dans la fibre optique. Au moins deux tailles différentes de cavités judicieusement disposées les unes par rapport aux autres sont utilisées dans la couche externe de manière à pouvoir coopérer entre elles de façon à augmenter encore le degré de confinement tout en maintenant un encombrement raisonnable. Il s'agit d'obtenir un faible niveau de pertes de confinement, c'est-à-dire par fuite de modes, pour un nombre restreint de cavités, c'est-à-dire de l'ordre de quelques dizaines de cavités seulement, typiquement moins de cinquante cavités.

Selon l'invention, il est prévu une fibre optique comme définie dans la revendication 1.

Il est important que la structure des cavités ne présente pas de chemin de silice vers l'extérieur par lequel le mode pourrait quitter le centre de la fibre optique ; c'est pourquoi, la distribution serrée et régulière selon l'invention, c'est-à-dire sans « couloir de silice », c'est-à-dire sans endroit ne comportant pas ou seulement peu de cavités, est particulièrement intéressante. De préférence, dans une section transversale de la fibre optique, la distance moyenne entre le périmètre extérieur de la deuxième région annulaire et le périmètre intérieur de la troisième région annulaire est inférieure au quart de la dimension moyenne d'une cavité de grande taille.

Selon un autre objet de l'invention, pour une application de la fibre optique consistant à réaliser une fonction non linéaire à l'aide de la fibre optique, il est aussi prévu une fibre optique comprenant : un coeur central (1) une gaine (rb et rc) entourant le coeur central (1) et comprenant des cavités (3, 4) ; et présentant, entre 1530nm et 1570nm : une surface effective inférieure ou égale à 10µm² ; une dispersion chromatique inférieure, en valeur absolue, à 3 ps/nm.km ; caractérisée en ce que la gaine de la fibre optique comprend moins de 70 cavités disposées de manière à ce que l'atténuation globale de la fibre optique reste inférieure à 10dB/km. La gaine de la fibre optique comprend de préférence moins de 50 cavités.

L'invention sera mieux comprise et d'autres particularités et avantages apparaîtront à l'aide de la description ci-après et des dessins joints, donnés à titre d'exemples, où :
- la figure 1 représente schématiquement la section d'un exemple de fibre optique à trous selon l'invention ;
- la figure 2 représente schématiquement à la fois les courbes de dispersion chromatique et de pente de dispersion chromatique en fonction de la longueur d'onde pour la fibre optique de la figure 1 ;
- la figure 3 représente schématiquement la courbe de la surface effective en fonction de la longueur d'onde pour la fibre optique de la figure 1 ;
- les figures 4 et 5 représentent schématiquement la section de deux autres exemples de fibre optique à trous selon l'invention ;
- la figure 6 représente schématiquement la section d'un exemple de fibre optique à trous à maintien de polarisation non couverte par les revendications ;
- la figure 7 représente schématiquement la section d'un exemple de fibre optique dopée à trous selon l'invention ;
- la figure 8 représente schématiquement la section d'un autre exemple de fibre optique à trous à maintien de polarisation selon l'invention ;
- la figure 9 représente schématiquement la section d'un autre exemple particulièrement avantageux de fibre optique à trous selon l'invention ;
- la figure 10 représente schématiquement la courbe de dispersion chromatique en fonction de la longueur d'onde pour la fibre optique de la figure 9.

De préférence, afin d'améliorer le compromis entre le confinement de mode dans la structure de la fibre optique et l'encombrement de la structure de Ici fibre optique, parmi les cavités de grande taille appartenant à la troisième région annulaire, au moins 10 cavités de grande taille sont situées sur une même couche annulaire et présentent chacune un rapport entre d'une part leur plus grande dimension et d'autre part la distance du centre de la cavité au centre du coeur qui est supérieur à 0.3. L'espace situé entre deux cavités de grande taille, qui sont contiguës et qui appartiennent à la troisième région annulaire, est avantageusement inférieur à la longueur d'onde d'utilisation de la fibre optique, ce qui améliore encore le confinement de mode dans la fibre optique.

De préférence, encore afin d'améliorer le compromis entre le confinement de mode dans la structure de la fibre optique et l'encombrement de la structure de la fibre optique, parmi les cavités de moyenne taille appartenant à la deuxième région annulaire, au moins 10 cavités de moyenne taille sont d'une part situées

De préférence, encore afin d'améliorer le compromis entre le confinement de mode dans la structure de la fibre optique et l'encombrement de la structure de la fibre optique, parmi les cavités de moyenne taille appartenant à la deuxième région annulaire, au moins 10 cavités de moyenne taille sont d'une part situées sur une même couche annulaire et d'autre part angulairement décalées par rapport aux cavités de grande taille de manière être situées en regard des espaces existant entre cavités de grande taille. Avantageusement, pour des raisons pratiques de réalisation, les cavités de moyenne taille appartenant à la deuxième région annulaire et étant situées sur une même couche annulaire sont au nombre de 12.

De préférence, la première région annulaire comprend des cavités de petite taille dont la section transversale reste strictement inférieure au premier seuil. Ces cavités de petite taille ont une fonction de modulation de certaines propriétés de la fibre optique comme la surface effective ou la dispersion chromatique par exemple. Dans une section transversale de la fibre optique, tout rayon qui va du centre du coeur vers l'extérieur de la fibre optique, lorsqu'il balaye angulairement un secteur angulaire entre deux cavités de moyenne taille appartenant à la deuxième région annulaire, rencontre préférentiellement au moins, une cavité appartenant soit à la deuxième région annulaire soit à la première région annulaire, sur au moins une partie du secteur angulaire balayé. Par exemple, entre deux cavités contiguës de moyenne taille, se trouve une cavité de petite taille. Cette cavité de petite taille n'a pas besoin de couvrir angulairement tout l'espace situé entre les deux cavités de moyenne taille, car c'est la position plus que la taille des cavités de petite taille qui leur permet de coopérer avec les autres cavités de moyenne et de grande taille de façon à améliorer le confinement de mode dans la fibre optique. De manière préférentielle, afin d'augmenter le confinement de mode tout en maintenant un encombrement raisonnable, la distance moyenne entre le périmètre extérieur de la première région annulaire et le périmètre intérieur de la deuxième région annulaire est inférieure à la moitié de la dimension moyenne d'une cavité de moyenne taille.

Dans un mode de réalisation préférentiel, d'une part la deuxième région annulaire et la troisième région annulaire sont circulaires, leur maille étant alors circulaire, et d'autre part la première région annulaire est hexagonale, sa maille étant alors triangulaire. Ce qui permet une fabrication plus simple de la préforme dont sera issue par fibrage la fibre optique à trous selon l'invention. Cette disposition permet d'augmenter la densité de cavité au détriment de la densité de silice, ce qui diminue l'indice équivalent et participe au confinement de mode dans la fibre optique tout en réduisant encore l'encombrement.

De préférence, la troisième région annulaire ne comporte qu'une seule couche de cavités qui sont de grande taille. La deuxième région annulaire ne comporte avantageusement qu'une seule couche de cavités qui sont de moyenne taille. Toutefois, ces régions annulaires peuvent aussi comporter plusieurs couches de cavités ou inclure des cavités de taille différente entre elles.

La fibre optique à trous selon l'invention est de préférence une fibre optique monomode, à la longueur d'onde d'utilisation. Pour cela, la plus grande dimension de l'ensemble de la structure de la fibre optique, c'est-à-dire dans le cas d'une répartition circulaire, le diamètre externe de la troisième région annulaire, est limitée. Le diamètre externe maximal admissible pour conserver à la fibre optique son caractère monomode dépend de la structure précise de la fibre optique à trous, c'est-à-dire notamment de la taille et de la disposition des cavités. De préférence, la plus grande dimension de l'ensemble de la structure de la fibre optique est inférieure à 30µm. La plus grande dimension de l'ensemble de la structure de la fibre optique est avantageusement inférieure à 25µm et plus avantageusement encore inférieure à 20µm,

La fibre optique à trous selon l'invention présente avantageusement une surface effective faible de manière à augmenter les effets non linéaires dont le coeur central de la fibre optique est le siège et par là accentuer une fonction non linéaire que pourrait remplir la fibre optique à trous. De préférence, dans la première région annulaire, des cavités sont disposées de manière à ce que la surface effective de la fibre optique soit inférieure à 10µm². Dans la première région annulaire, des cavités sont disposées de manière à ce que la surface effective de la fibre optique soit avantageusement inférieure à 5µm².

De manière à ce que ladite fonction non linéaire soit le plus uniforme possible sur une bande spectrale donnée, la dispersion chromatique est choisi la plus faible possible et la plus uniforme possible sur ladite bande spectrale. La bande C allant de 1530nm à 1570nm est une bande préférentielle d'utilisation. Par conséquent, de préférence, dans la première région annulaire, des cavités sont disposées de manière à ce que la dispersion chromatique de la fibre optique entre 1530nm et 1570nm, voire entre 1500nm et 1625nm, reste inférieure, en valeur absolue, à 3 ps/nm-km, voire inférieure, en valeur absolue, à 1 ps/nm-km. Dans la première région annulaire, des cavités sont disposées de manière à ce qu'une longueur d'onde de dispersion nulle soit avantageusement comprise entre 1530nm et 1570nm.

Des exemples de fonction, notamment non linéaire, que peut remplir une fibre optique à trous selon l'invention vont maintenant être donnés.

Lorsque le coeur de la fibre optique à trous selon l'invention est dopé avec une terre rare, la fibre optique à trous selon l'invention peut être utilisée pour réaliser une cavité laser ou bien un dispositif d'amplification.

Lorsque le coeur de la fibre optique à trous selon l'inventino est dopé avec un élément ou plusieurs éléments parmi le Germanium, le phosphore, le plomb, le bismuth, le lithium ou le niobium, la fibre optique à trous selon l'invention peut être utilisée pour réaliser un dispositif d'amplification Raman.

La fibre optique à trous selon l'invention peut aussi être utilisée pour réaliser un dispositif de conversion en longueur d'onde, un dispositif de démultiplexage en longueur d'onde, un dispositif de régénération optique de signal optique, ou un dispositif de filtrage optique incluant un absorbant saturable.

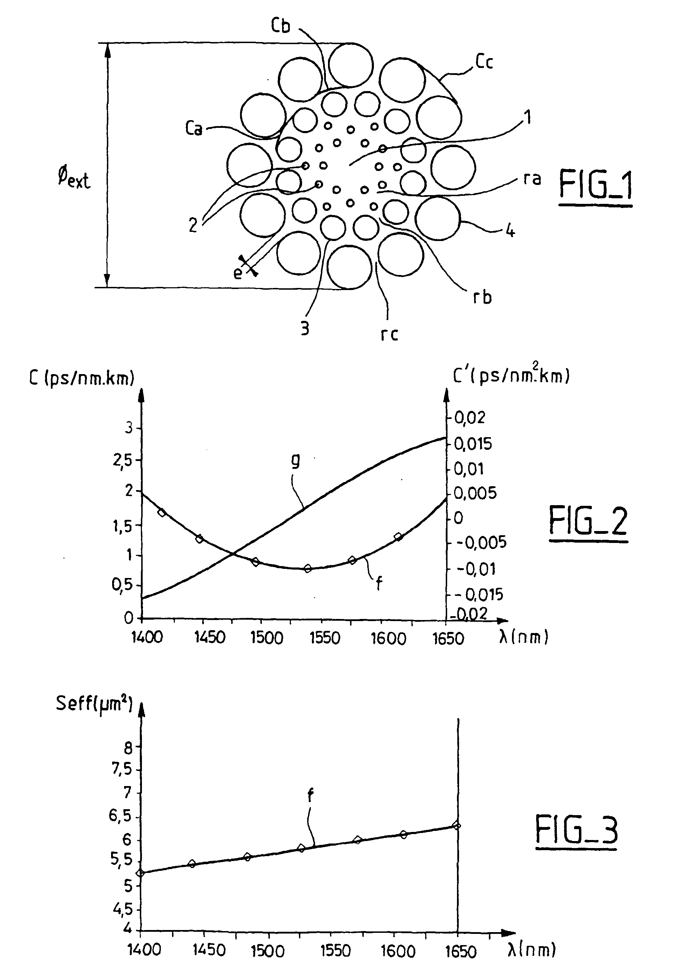

Des exemples de fibres optiques à trous selon l'invention ainsi que certaines de leurs propriétés vont maintenant être présentées en relation avec les figures. De manière générale, sur les figures 1 et 4 à 9, la section droite de fibre optique représentée présente un coeur 1, une première région annulaire comprenant au moins des cavités 2 de petite taille, une deuxième région annulaire comprenant au moins des cavités 3 de moyenne taille, une troisième région annulaire comprenant au moins des cavités 4 de grande taille. Les régions annulaires peuvent aussi comporter une certaine quantité, généralement une minorité, de cavités d'une taille distincte de celle de la majorité des cavités de ladite région annulaire. Le périmètre extérieur d'une région annulaire est le cercle circonscrit à l'extérieur de l'ensemble des cavités de ladite région annulaire. Le périmètre intérieur d'une région annulaire est le cercle inscrit à l'intérieur de l'ensemble des cavités de ladite région annulaire. Lorsque la répartition des cavités n'est pas circulaire, par exemple lorsque c'est un hexagone, le périmètre sera l'hexagone circonscrit ou inscrit correspondant, et de la même manière pour toute autre forme. Sur l'ensemble des figures, la différence entre le périmètre intérieur de la troisième région annulaire comprenant les cavités de grande taille et le périmètre extérieur de la deuxième région annulaire comprenant les cavités de moyenne taille est inférieure au quart du diamètre moyen d'une cavité de grande taille. Lorsqu'une cavité est circulaire, sa dimension moyenne est son diamètre ; lorsqu'une cavité moyenne n'est pas circulaire, sa dimension moyenne est le diamètre qu'aurait un disque de même surface, étant donné que l'on s'est placé dans une section droite de la fibre optique. Sur les figures, les sections de fibre optique présentent des cavités parfaitement circulaires, ce qui n'est pas le cas dans la pratique où les cavités peuvent être déformées.

La fibre optique de la figure 1 présente un coeur 1 non dopé, une première région annulaire ra comprenant trois couches hexagonales de six cavités 2 de petite taille, une deuxième région annulaire rb constituée d'une couche circulaire de douze cavités 3 de moyenne taille, une troisième région annulaire rc constituée d'une couche circulaire de douze cavités 4 de grande taille. Toutes les cavités 2 de petite taille ont la même taille. Entre deux cavités 4 de grande taille se trouve un espace e. Ca est le cercle circonscrit à l'extérieur des cavités 3 de moyenne taille constituant la deuxième région annulaire. Cb est le cercle inscrit à l'intérieur des cavités 4 de grande taille constituant la troisième région annulaire. Cc est le cercle circonscrit à l'extérieur des cavités 4 de grande taille constituant la troisième région annulaire. Pour des raisons de clarté de la figure 1, seules des portions des cercles Ca, Cb et Cc sont représentés. La plus grande dimension de l'ensemble de la structure de la fibre optique est le diamètre extérieur de la couronne des cavités 4 de grande taille lequel est noté Φext.

La figure 2 représente schématiquement à la fois les courbes f de dispersion chromatique C exprimée en ps/nm.km et g de pente de dispersion chromatique C' exprimée en ps/nm².km en fonction de la longueur d'onde λ exprimée en nm pour la fibre optique de la figure 1. La dispersion chromatique reste inférieure en valeur absolue à 3 ps/nm.km sur l'ensemble de bandes spectrales s'étendant de 1400nm à 1650nm. La pente de dispersion chromatique reste inférieure en valeur absolue à 0.01 ps/nm².km sur l'ensemble de bandes spectrales s'étendant de 1400nm à 1650nm.

La figure 3 représente schématiquement la courbe f de la surface effective Seff expriméen en µm² en fonction de la longueur d'onde λ exprimée en nm pour la fibre optique de la figure 1. La surface effective reste comprise entre 5µm² et 6.5*µ*m² sur l'ensemble de bandes spectrales s'étendant de 1400nm à 1650nm.

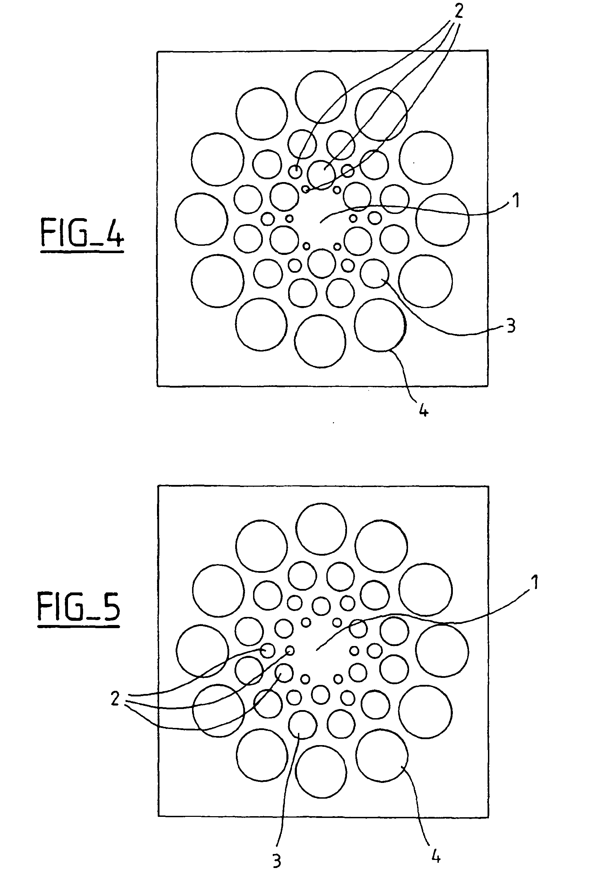

La fibre optique de la figure 4 présente un coeur 1 non dopé, une première région annulaire comprenant deux couches hexagonales de six cavités 2 de petite taille et une couche hexagonale de six cavités 2 de moyenne taille, une couche circulaire de douze cavités 3 de moyenne taille, une couche circulaire de douze cavités 4 de grande taille. Les cavités 2 de petite taille se répartissent entre deux tailles différentes.

La fibre optique de la figure 5 présente un coeur 1 non dopé, une première région annulaire comprenant trois couches hexagonales de six cavités 2 de petite taille, une couche circulaire de douze cavités 3 de moyenne taille, une couche circulaire de douze cavités 4 de grande taille. Les cavités 2 de petite taille se répartissent entre trois tailles différentes.

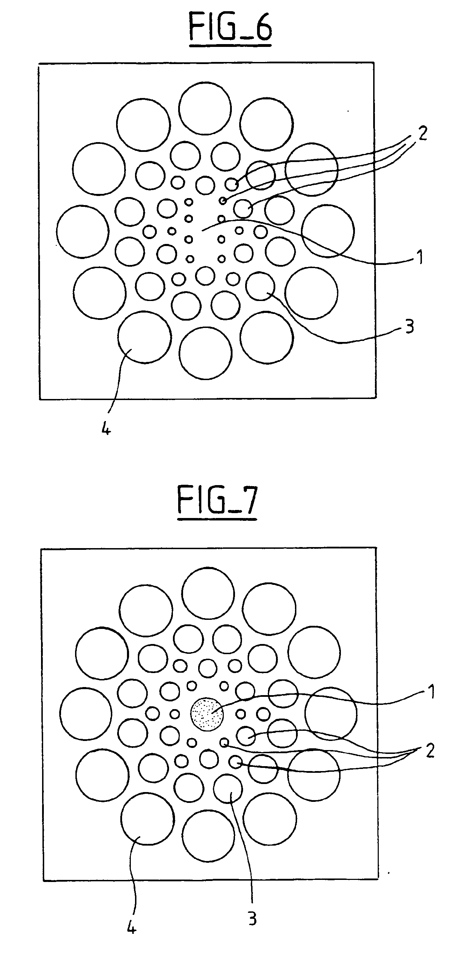

La fibre optique de la figure 6 non couverte par les revendications présente un coeur 1 non dopé, une première région annulaire comprenant des cavités 2 de petite taille, une couche circulaire de douze cavités 3 de moyenne taille, une couche circulaire de douze cavités 4 de grande taille. Les cavités 2 de petite taille se répartissent entre trois tailles différentes et sont disposées de manière que la structure présente deux axes de symétrie seulement, ce qui rend cette structure intéressante pour la réalisation d'une fibre optique à maintien de polarisation.

La fibre optique de la figure 7 présente un coeur 1 dopé, une première région annulaire comprenant trois couches hexagonales de six cavités 2 de petite taille, une couche circulaire de douze cavités 3 de moyenne taille, une couche circulaire de douze cavités 4 de grande taille. Les cavités 2 de petite taille se répartissent entre trois tailles différentes. Les autres structures présentées dans les autres figures pourraient également présenter un coeur 1 qui soit dopé.

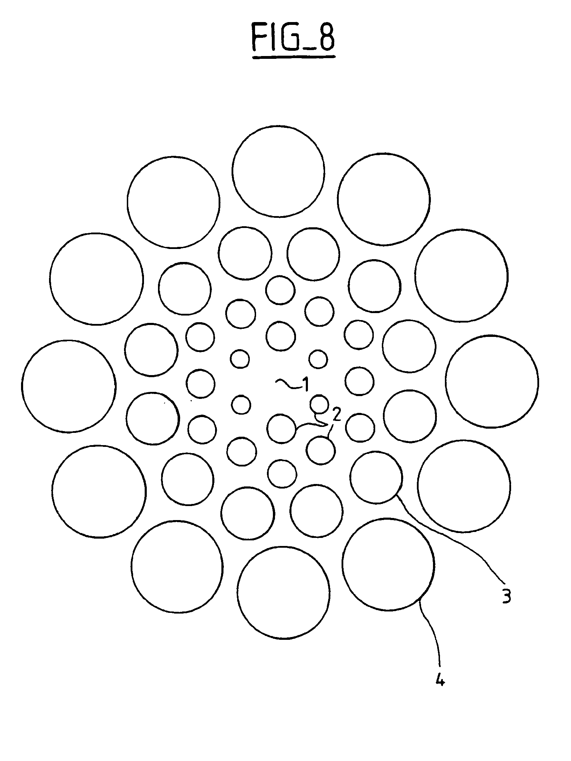

La fibre optique de la figure 8 présente un coeur 1 non dopé, une première région annulaire comprenant des cavités 2 de petite taille, une couche circulaire de douze cavités 3 de moyenne taille, une couche circulaire de douze cavités 4 de grande taille. Les cavités 2 de petite taille se répartissent entre deux tailles différentes et présentent une disposition hexagonale. Le diamètre extérieur de cette structure, vaut 15.9µm. Cette fibre optique présente une biréfringence valant environ 3.5 10⁻³. A une longueur d'onde de 1550nm, cette fibre optique présente approximativement une dispersion chromatique nulle pour l'une des deux polarisations et une surface effective de 3.6µm².

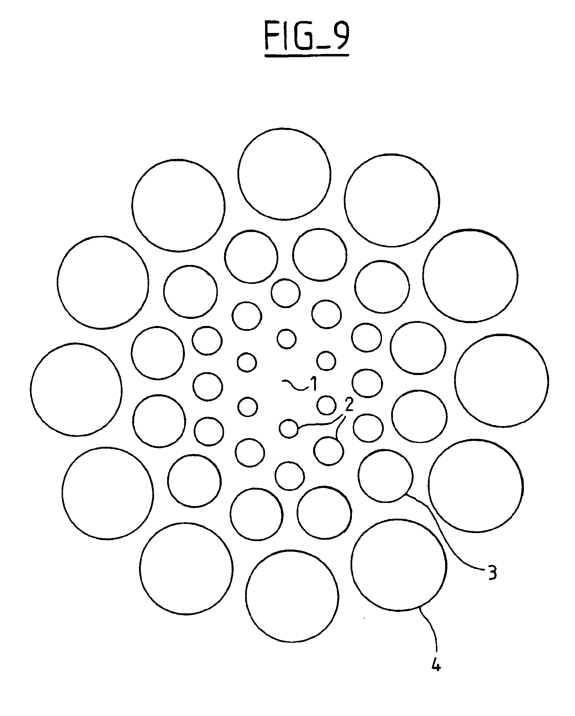

La fibre optique de la figure 9 présente un coeur 1 non dopé, une première région annulaire comprenant deux couches hexagonales, respectivement de six et de douze cavités 2 de petite taille, une couche circulaire de douze cavités 3 de moyenne taille, une couche circulaire de douze cavités 4 de grande taille. Les cavités 2 de petite taille se répartissent en deux tailles différentes. Le diamètre extérieur de cette structure, vaut 14.8µm. Cette fibre optique présente une dispersion chromatique comprise entre 0 et 1 ps/nm.km sur une plage de longueur d'onde s'étendant de 1500nm à 1650nm.

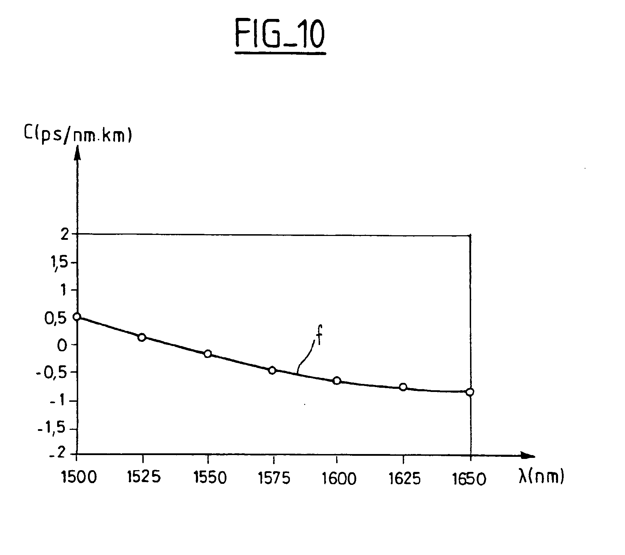

La figure 10 représente schématiquement la courbe de dispersion chromatique en fonction de la longueur d'onde pour la fibre optique de la figure 9. En ordonnée se trouve la dispersion chromatique C exprimée en ps/nm.km tandis qu'en abscisse se trouve la longueur d'onde λ exprimée en nm. La courbe f de dispersion chromatique reste, entre 1500nm et 1650nm, inférieure, en valeur absolue, à 1 ps/nm.km.

## Revendications

1. Fibre optique comprenant :
- un coeur central (1),
- une première région annulaire (ra) entourant le coeur central (1),
- une deuxième région annulaire (rb) entourant la première région annulaire (ra) et comprenant des cavités (3) de moyenne taille dont la section transversale reste strictement comprise entre un premier seuil donné et un deuxième seuil donné strictement supérieur au premier seuil,
- une troisième région annulaire (rc) entourant la deuxième région annulaire (rb) et comprenant des cavités (4) de grande taille dont la section transversale reste strictement supérieure au deuxième seuil,
où
dans une section transversale de la fibre optique,
- d'une part, tout rayon qui va du centre du coeur vers l'extérieur de la fibre optique rencontre au moins, soit une cavité (3) de moyenne taille appartenant à la deuxième région annulaire (rb), soit une cavité (4) de grande taille appartenant à la troisième région annulaire (rc),
- et d'autre part, la distance moyenne entre le périmètre extérieur (Co) de la deuxième région annulaire (rb) et le périmètre intérieur (Cb) de la troisième région annulaire (rc) est inférieure à la moitié de la dimension moyenne d'une cavité (4) de grande taille,
où la première région annulaire (ra) comprend des cavités (2) de petite taille dont la section transversale reste strictement inférieure du premier seuil,
où, parmi les cavités (4) de grande taille appartenant à la troisième région annulaire (rc), au moins 10 cavités (4) de grande taille sont situées sur une même couche annulaire,
et où les cavités de la deuxième région annulaire (rb) et la troisième région annulaire (rc) sont arrangées de manière circulaire alors que les cavités de la première région annulaire (ra) sont arrangées de manière hexagonale.

2. Fibre optique selon la revendication 1, où, dans une section transversale de la fibre optique, la distance moyenne entre le périmètre extérieur (Ca) de la deuxième région annulaire (rb) et le périmètre intérieur (Cb) de la troisième région annulaire (rc) est inférieure au quart de la dimension moyenne d'une cavité (4) de grande taille.

3. Fibre optique selon l'une quelconque des revendications 1 à 2, où, dans une section transversale de la fibre optique, tout rayon qui va du centre du coeur vers l'extérieur de la fibre optique, lorsqu'il balaye angulairement un secteur angulaire entre deux cavités (3) de moyenne taille appartenant à la deuxième région annulaire (rb), rencontre au moins, une cavité (2, 3) appartenant soit à la deuxième région annulaire (rb) soit à la première région annulaire (ra), sur au moins une partie du secteur angulaire balayé.

4. Fibre optique selon la revendication 3, où, dans une section transversale de la fibre optique, la distance moyenne entre le périmètre extérieur de la première région annulaire (ra) et le périmètre intérieur de la deuxième région annulaire (rb) est inférieure à la moitié dé la dimension moyenne d'une cavité (3) de moyenne taille.

5. Fibre optique selon l'une quelconque des revendications précédentes, où, parmi les cavités (4) de grande taille appartenant à la troisième région annulaire (rc), au moins 10 cavités (4) de grande taille sont situées sur une même couche annulaire et présentent chacune un rapport entre d'une part leur plus grande dimension et d'autre part la distance du centre de la cavité (4) au centre du coeur qui est supérieur à 0.3.

6. Fibre optique selon la revendication 5, où, parmi les cavités (3) de moyenne taille appartenant à la deuxième région annulaire (rb), au moins 10 cavités (3) de moyenne taille sont d'une part situées sur une même couche annulaire et d'autre part angulairement décalées par rapport aux cavités (4) de grande faille de manière être situées en regard des espaces (e) existant entre cavités (4) de grande taille.

7. Fibre optique selon l'une quelconque des revendications précédentes, où l'espace (e) situé entre deux cavités (4) de grande taille, qui sont contiguës et qui appartiennent à la troisième région annulaire (rc), est inférieur à la longueur d'onde d'utilisation de la fibre optique.

8. Fibre optique selon l'une quelconque des revendications précédentes, où, dans une section transversale de la fibre optique, la plus grande dimension (Φext) de l'ensemble de la structure de la fibre optique est inférieure à 30*µ*m.

9. Fibre optique selon la revendication 8, où, dans une section transversale de la fibre optique, la plus grande dimension (Φext) de l'ensemble de la structure de la fibre optique est inférieure a 25µm.

10. Fibre optique selon la revendication 9, où, dans une section transversale de la fibre optique, la plus grande dimension (Φext) de l'ensemble de la structure de la fibre optique est inférieure à 20µm.

11. Fibre optique selon l'une quelconque des revendications précédentes, où, dans la première région annulaire (ra), des cavités (2) sont disposées de manière à ce que la surface effective de la fibre optique soit inférieure à 10µm².

12. Fibre optique selon la revendication 11, où, dans la première région annulaire (ra), des cavités (2) sont disposées de manière à ce que la surface effective de la fibre optique soit inférieure à 5µm².

13. Fibre optique selon l'une quelconque des revendications précédentes, où, dans la première région annulaire (ra), des cavités (2) sont disposées de manière à ce que la dispersion chromatique, entre 1530nm et 1570nm, de la fibre optique reste inférieure, en valeur absolue, à 3 ps/nm-km.

14. Fibre optique selon la revendication 13, où, dans la première région annulaire (ra), des cavités (2) sont disposées de manière à ce que la dispersion chromatique, entre 1500nm et 1625nm, de la fibre optique reste inférieure, en valeur absolue, à 3 ps/nm-km.

15. Fibre optique selon l'une quelconque des revendications 13 à 14, où, dans la première région annulaire (ra), des cavités (2) sont disposées de manière à ce que la dispersion chromatique à 1550nm de la fibre optique reste inférieure, en valeur absolue, à 1 ps/nm-km.

16. Fibre optique selon la revendication 15, où, dans la première région annulaire (ra), des cavités (2) sont disposées de manière à ce que la dispersion chromatique, entre 1500nm et 1625nm, de la fibre optique reste inférieure, en valeur absolue, à 1 ps/nm-km.

17. Fibre optique selon l'une quelconque des revendications précédentes, où, dans la première région annulaire (ra), des cavités (2) sont disposées de manière à ce qu'une longueur d'onde de dispersion nulle soit comprise entre 1530nm et 1570nm.

18. Fibre optique selon l'une quelconque des revendications précédentes, où le coeur (1) est dopé avec une terre rare.

19. Cavité laser comprenant une fibre optique selon la revendication 17.

20. Amplificateur comprenant une fibre optique selon la revendication 17.

21. Fibre optique selon l'une quelconque des revendications 1 à 8, où le coeur est dopé avec un élément ou plusieurs éléments parmi le germanium, le phosphore, le plomb, le bismuth, le lithium ou le niobium.

22. Dispositif d'amplification Raman comprenant une fibre optique selon la revendication 21.

23. Dispositif de conversion en longueur d'onde comprenant une fibre optique selon l'une quelconque des revendications 1 à 16.

24. Dispositif de démultiplexage en longueur d'onde comprenant une fibre optique selon l'une quelconque des revendications 1 à 16.

25. Dispositif de régénération optique de signal optique comprenant une fibre optique selon l'une quelconque des revendications 1 à 16.

26. Dispositif de filtrage optique incluant un absorbant saturable et comprenant une fibre optique selon l'une quelconque des revendications 1 à 16.

27. Fibre optique selon la revendication 6, où les cavités (4) de grande taille appartenant à la troisième région annulaire (rc) et étant situées sur une même couche annulaire sont au nombre de 12.

28. Fibre optique selon la revendication 7, où les cavités (3) de moyenne taille appartenant à la deuxième région annulaire (rb) et étant situées sur une même couche annulaire sont au nombre de 12.

## Claims

1. An optical fiber comprising:
- a central core (1),
- a first ring region (ra) surrounding the central core (1),
- a second ring region (rb) surrounding the first ring region (ra) and comprising medium-sized cavities (3) whose cross-section remains strictly within a first given threshold and a second given threshold strictly greater than the first threshold,
- a third ring region (rc) surrounding the second ring region (rb) and comprising large-sized cavities (4) whose cross-section remains strictly greater than the second threshold, in which, in a cross-section of the optical fiber:
- firstly, any radius emanating from the center of the optical fiber core outward encounters at least either one medium-sized cavity (3) belonging to the second ring region (rb), or else a large-sized cavity (4) belonging to the third ring region (rc)
- and secondly, the average distance between the outer perimeter (Ca) of the second ring region (rb) and the inner perimeter (Cb) of the third ring region (rc) is less than half the average dimensions of a large-sized cavity (4),
- in which the first ring region (ra) comprises small-sized cavities (2) whose cross-section remains strictly less than the first threshold,
- in which, among the large-sized cavities (4) belonging to the third ring region (re), at least 10 large-sized cavities (4) are located on a single ring layer,
- and in which the cavities in the second ring region (rb) and the third ring region (re) are circular, while the cavities in the first ring region (ra) are arranged hexagonally.

2. An optical fiber according to claim 1, in which, in a cross-section of the optical fiber, the average distance between the, outer perimeter (Ca) of the second ring region (rb) and the inner perimeter (Cb) of the third ring region (rc) is less than one-fourth the average dimensions of a large-sized cavity (4).

3. An optical fiber according to one of the claims 1 or 2, in which, in a cross-section of the optical fiber, any radius emanating from the center of the optical fiber core outward, whenever it angularly sweeps an angular segment between two medium-sized cavities (3) belonging to the second ring region (rb), encounters at least one cavity (2, 3) belonging either to the second ring region (rb) or to the first ring region (ra), over at least part of the angular segment swept.

4. An optical fiber according to claim 3, in which, in a cross-section of the optical fiber, the average distance between the outer perimeter of the first ring region (ra) and the inner perimeter of the second ring region (rb) is less than half the average dimensions of a medium-sized cavity (3).

5. An optical fiber according to one of the preceding claims, in which, among the large-sized cavities (4) belonging to the third ring region (rc), at least 10 large-sized cavities (4) are located on a single ring layer, and for each one, the ratio of i) their largest dimension to ii) the distance from the center of the cavity (4) to the center of the core is greater than 0.3.

6. An optical fiber according to claim 5, in which, among the medium-sized cavities (3) belonging to the second ring region (rb), at least 10 medium-sized cavities (3) both are located on a single ring layer and are angularly shifted with respect to the large-sized cavities (4), so that they are located facing spaces (e) that exist between the large-sized cavities (4).

7. An optical fiber according to one of the preceding claims, in which the space (e) located between two large-sized cavities (4), which are contiguous and which belong to the third ring region (rc), is less than the operating wavelength of the optical fiber.

8. An optical fiber according to one of the preceding claims, in which, in a cross-section of the optical fiber, the largest dimension (Φext) of the entire structure of the optical fiber is less than 30*µ*m.

9. An optical fiber according to claim 8, in which, in a cross-section of the optical fiber, the largest dimension (Φext) of the entire structure of the optical fiber is less than 25µm.

10. An optical fiber according to claim 9, in which, in a cross-section of the optical fiber, the largest dimension (Φext) of the entire structure of the optical fiber is less than 20µm.

11. An optical fiber according to one of the preceding claims, in which, in the first ring region (ra), cavities (2) are arranged in such a way so that the actual surface of the optical fiber is less than 10µm.

12. An optical fiber according to claim 11, in which, in the first ring region (ra), cavities (2) are arranged in such a way so that the actual surface of the optical fiber is less than 5µm².

13. An optical fiber according to one of the preceding claims, in which, in the first ring region (ra), cavities (2) are arranged in such a way so that the chromatic dispersion, between 1530 nm and 1570 nm, of the optical fiber remains less, in absolute value, than 3 ps/nm-km.

14. An optical fiber according to claim 13, in which, in the first ring region(ra), cavities (2) are arranged in such a way so that the chromatic dispersion, between 1500 nm and 1625 nm, of the optical fiber remains less, in absolute value, than 3 ps/nm-km.

15. An optical fiber according to either one of the claims 13 or 14, in which, in the first ring region (ra), cavities (2) are arranged in such a way so that the chromatic dispersion of the optical fiber, at 1550 nm, remains less, in absolute value, than 1 ps/nm-km.

16. An optical fiber according to claim 15, in which, in the first ring region (ra), cavities (2) are arranged in such a way so that the chromatic dispersion, between 1500 nm and 1625 nm, of the optical fiber remains less, in absolute value, than 1 ps/nm-km.

17. An optical fiber according to any one of the preceding claims, in which, in the first ring region (ra), cavities (2) are arranged in such a way so that a zero-dispersion wavelength is within 1530 nm and 1570 nm inclusive.

18. An optical fiber according to any one of the preceding claims, in which the core is rare-earth-doped.

19. A laser cavity comprising an optical fiber according to claim 17.

20. An amplifier comprising an optical fiber according to claim 17,

21. An optical fiber according to any one of the claims 1 to 18, in which the core is doped with one or more elements selected from among germanium, phosphorus, lead, bismuth, lithium, and niobium.

22. A Raman amplification device comprising an optical fiber according to claim 21,

23. A wavelength conversion device comprising an optical fiber according to any one of the claims 1 to 16.

24. A demultiplexing conversion device comprising an optical fiber according to any one of the claims 1 to 16.

25. An optical signal regeneration device comprising an optical fiber according to any one of the claims 1 to 16.

26. An optical filtering device including a saturable absorbent and comprising an optical fiber according to any one of the claims 1 to 16.

27. An optical fiber according to claim 6, in which the large-sized cavities (4) belonging to the third ring region (rc) and located on the same ring layer are 12 in number.

28. An optical fiber according to claim 7, in which the medium-sized cavities (3) belonging to the second ring region (rb) and located on the same ring layer are 12 in number.

## Patentansprüche

1. Optische Faser, umfassend:
- Einen mittleren Kern (1),
- Einen ersten ringförmigen Bereich (ra), welcher den mittleren Kern (1) umgibt,
- Einen zweiten ringförmigen Bereich (rb), welcher den ersten ringförmigen Bereich (ra) umgibt und Hohlräume (3) mittlerer Größe aufweist, deren Querschnitt strikt zwischen einem ersten gegebenen Grenzwert und einem zweiten gegebenen Grenzwert, welcher höher als der erste ist, begriffen ist,
- Einen dritten ringförmigen Bereich (rc), welcher den zweiten ringförmigen Bereich (rb) umgibt und große Hohlräume (4) aufweist, deren Querschnitt strikt größer als der zweite Grenzwert ist,
wobei, in einem Querschnitt der optischen Faser:
- einerseits jeder Strahl, der von der Mitte des Kerns zum Äußeren der optischen Fiber dringt, mindestens entweder auf einen Hohlraum (3) mittlerer Größe, welcher dem zweiten ringförmigen Bereich (rb) angehört, oder einen großen Hohlraum (4), welcher dem dritten ringförmigen Bereich (rc) angehört, trifft,
- und andererseits die durchschnittliche Entfernung zwischen dem Außenumfang (Ca) des zweiten ringförmigen Bereichs (rb) und dem innenumfang (Cb) des dritten ringförmigen Bereichs (rc) kleiner ist als die Hälfte der durchschnittlichen Abmessung eines großen Hohlraums (4),
wobei der erste ringförmige Bereich (ra) kleine Hohlräume (2) aufweist, deren Querschnitt strikt kleiner als der erste Grenzwert ist,
wobei von den großen Hohlräumen (4), welche dem dritten ringförmigen Bereich (rc) angehören, mindestens 10 große Hohlräume (4) auf einer selben ringförmigen Schicht angeordnet sind,
und wobei die Hohlräume des zweiten ringförmigen Bereichs (rb) und des dritten ringförmigen Bereichs (rc) im Kreis angeordnet sind, während die Hohlräume des ersten ringförmigen Bereichs (ra) im Sechseck angeordnet sind.

2. Optische Faser nach Anspruch 1, wobei in einem Querschnitt der optischen Faser die durchschnittliche Entfernung zwischen dem Außenumfang (Ca) des zweiten ringförmigen Bereichs (rb) und dem innenumfang (Cb) des dritten ringförmigen Bereichs (rc) kleiner als das Viertel der durchschnittlichen Abmessung eines großen Hohlraums (4) ist.

3. Optische Faser nach einem beliebigen der Ansprüche 1 bis 2, wobei in einem Querschnitt der optischen Faser jeder Strahl, welcher von der Mitte des Kerns in Richtung der Außenseite der optischen Faser dringt, wenn er einen Winkelbereich zwischen zwei Hohlräumen (3) mittlerer Größe, welche dem zweiten ringförmigen Bereich (rb) angehören, winklig abtastet, mindestens auf einen dem zweiten ringförmigen Bereichs (rb) oder dem ersten ringförmigen Bereich (ra) angehörenden Hohlraum (2, 3) in mindestens einem Teil des abgetasteten Winkelbereichs trifft.

4. Optische Faser nach Anspruch 3, wobei in einem Querschnitt der optischen Faser die durchschnittliche Entfernung zwischen dem Außenumfang des ersten ringförmigen Bereichs (ra) und dem innenumfang des zweiten ringförmigen Bereichs (rb) kleiner als die Hälfte der durchschnittlichen Abmessung eines Hohlraums (3) mittlerer Größe ist.

5. Optische Faser nach einem beliebigen der vorstehenden Ansprüche, wobei von den großen Hohlräumen (4), welche dem dritten ringförmigen Bereich (rc) angehören, mindestens 10 große Hohlräume (4) auf einer selben ringförmigen Schicht angeordnet sind und jeweils ein Verhältnis zwischen, einerseits, ihren größten Abmessungen und, andererseits, der Entfernung von der Mitte des Hohlraums (4) bis zur Mitte des Kerns, welcher größer als 0,3 ist, aufweisen.

6. Optische Faser nach Anspruch 5, wobei von den hohlräumen (3) mittlerer Größe, welche dem zweiten ringförmigen Bereich (rb) angehören, mindestens 10 Hohlräume (3) mittler Größe einerseits auf einer selben ringförmigen Schicht angeordnet sind, und andererseits gegenüber den großen Hohlräumen (4) winklig so versetzt sind, dass sie sich gegenüber den zwischen den großen Hohlräumen (4) bestehenden Zwischenräumen (e) befinden.

7. Optische Faser nach einem beliebigen der vorstehenden Ansprüche, wobei der bestehende Zwischenraum zwischen zwei großen Hohlräumen (4), welche benachbart sind und dem dritten ringförmigen Bereich (rc) angehören, kleiner als die genutzte Wellenlänge der optischen Faser ist.

8. Optische Faser nach einem beliebigen der vorstehenden Ansprüche, wobei in einem Querschnitt der optischen Faser die größte Abmessung (Φext) der gesamten Struktur der optischen Faser kleiner als 30µm ist.

9. Optische Faser nach Anspruch 8, wobei in einem Querschnitt der optischen Faser, die größte Abmessung (Φext) der gesamten Struktur der optischen Faser kleiner als 25µm ist.

10. Optische Faser nach Anspruch 9, wobei in einem Querschnitt der optischen Faser, die größte Abmessung (Φext) der gesamten Struktur der optischen Faser kleiner als 20µm ist.

11. Optische Faser nach einem beliebigen der vorstehenden Ansprüche, wobei in dem ersten ringförmigen Bereich (ra) Hohlräume (2) so angeordnet sind, dass die effektive Fläche der optischen Faser kleiner als 10µm² ist.

12. Optische Faser nach Anspruch 11. wobei in dem ersten ringförmigen Bereich (ra) Hohlräume (2) so angeordnet sind, dass die effektive Fläche der optischen Faser kleiner als 5µm² ist.

13. Optische Faser nach einem beliebigen der vorstehenden Ansprüche, wobei in dem ersten ringförmigen Bereich (ra) Hohlräume (2) so angeordnet sind, dass die chromatische Dispersion, zwischen 1530nm und 1570nm, der optischen Faser, in absolutem Wert, unter 3 ps/nm-km bleibt.

14. Optische Faser nach Anspruch 11, wobei in dem ersten ringförmigen Bereich (ra), Hohlräume (2) so angeordnet sind, dass die chromatische Dispersion, zwischen 1500nm und 1625nm, der optischen Faser, in absolutem Wert, unter 3 ps/nm-km bleibt.

15. Optische Faser nach einem beliebigen der Ansprüche 13 bis 14, wobei in dem ersten ringförmigen Bereich (ra), Hohlräume (2) so angeordnet sind, dass die chromatische Dispersion von 1550nm der optischen Faser, in absolutem Wert, unter 1 ps/nm-km bleibt.

16. Optische Faser nach Anspruch 15, wobei in dem ersten ringförmigen Bereich (ra) Hohlräume (2) so angeordnet sind, dass die chromatische Dispersion, zwischen 1500nm und 1625nm, der optischen Faser, in absolutem Wert, unter 1 ps/nm-km bleibt.

17. Optische Faser nach einem beliebigen der vorstehenden Ansprüche, wobei in dem ersten ringförmigen Bereich (ra) Hohlräume (2) so angeordnet sind, dass eine Dispersionswellenlänge von Null zwischen 1530nm und 1570nm liegt.

18. Optische Faser nach einem beliebigen der vorstehenden Ansprüche, wobei der Kern (1) mit einer seltenen Erde dotiert ist.

19. Laser-Hohlraum mit einer optischen Faser nach Anspruch 17.

20. Verstärker mit einer optischen Faser nach Anspruch 17.

21. Optische Faser nach einem beliebigen der Anspruche 1 bis 18, wobei der Kern mit einem Element oder mehreren Elementen, darunter Germanium, Phosphor, Blei, Wismut, Lithium oder Niobium, dotiert ist.

22. mit einer optischen Faser nach Anspruch 21.

23. Wellenlängen-Konverter mit einer optischen Faser nach einem beliebigen der Ansprüche 1 bis 16.

24. Wellenlängen-Demultiplexierungsvorrichtung einschließlich einer optischen Faser nach einem beliebigen der Ansprüche 1 bis 16.

25. Optische Regenerationsvorrichtung eines optischen Signals mit einer optischen Faser nach einem beliebigen der Ansprüche 1 bis 16.

26. Optische Filtervorrichtung mit einem sättungsfähigen Absorber und einer optischen Faser nach einem beliebigen der Ansprüche 1 bis 16.

27. Optische Faser nach Anspruch 6, wobei die dem dritten ringförmigen Bereich (rc) angehörenden und sich auf einer selben ringförmigen Schicht befindenden großen Hohlräume (4) in einer Anzahl von 12 sind.

28. Optische Faser nach Anspruch 7, wobei die dem zweiten ringförmigen Bereich (rb) angehörenden und sich auf einer selben ringförmigen Schicht befindenden Hohlräume (3) mittlerer Größe in einer Anzahl von 12 sind.
